# EUROPÄISCHE PATENTSCHRIFT

(11) **EP 2 470 319 B1**
(45) Veröffentlichungstag und Bekanntmachung des Hinweises auf die Patenterteilung: **28.10.2015**
(21) Anmeldenummer: 10744521.5
(22) Anmeldetag: 11.08.2010
(51) Int. Cl.: B23B 5/18, B23B 5/36, B23Q 27/00, B23P 15/02

(54) **VERFAHREN ZUR SPANENDEN DREHBEARBEITUNG UND DREHBEARBEITUNGSVORRICHTUNG**
METHOD FOR MACHINING BY LATHING, AND LATHE
PROCÉDÉ DE TOURNAGE ET DISPOSITIF DE TOURNAGE

(30) Priorität: 29.08.2009 DE 102009039346
(43) Veröffentlichungstag der Anmeldung: 04.07.2012
(73) Patentinhaber: J.G. Weisser Söhne GmbH & Co. KG, 78112 St. Georgen (DE)
(72) Erfinder: RETTICH, Thorsten, 78126 Königsfeld (DE); JÖRG, Reiner, 78144 Schramberg (DE)
(74) Vertreter: Kunst, Manuel Nikolaus Johannes
(86) Internationale Anmeldenummer: PCT/EP2010/004902
(87) Internationale Veröffentlichungsnummer: WO 2011/023293

(56) Entgegenhaltungen:
- WO-A1-01/15845
- DE-A1- 19 511 420
- DE-C- 625 156
- US-A- 2 291 035
- US-A- 3 593 603
- US-A- 5 309 800
- US-A- 5 396 821
- US-A- 5 622 092

## Beschreibung

Die Erfindung betrifft ein Verfahren zur spanenden Drehbearbeitung eines langgestreckten, eine Längsachse aufweisenden Werkstücks, welches Werkstück in einer Spannvorrichtung aufgespannt wird und mit einer Bearbeitungsgeschwindigkeit um eine Drehachse rotiert wird, wobei ein die Drehbearbeitung verrichtendes Drehwerkzeug quer, insbesondere radial, zur Drehachse und/oder tangential zugestellt wird und die Schnittgeschwindigkeit der Drehbearbeitung aus der Rotation des Werkstücks relativ zu dem Drehwerkzeug resultiert.

Die Erfindung betrifft weiter eine Drehbearbeitungsvorrichtung mit einer von einer Drehspindel angetriebenen Spannvorrichtung und einem quer, insbesondere radial, zu der Drehachse der Drehspindel und/oder tangential zustellbaren Werkzeugträger mit einem Drehwerkzeug.

Derartige Verfahren und Vorrichtungen zum Drehbearbeiten von Werkstücken sind in unterschiedlichster Form bekannt, wobei das Werkstück um eine zentrale Achse, die Drehachse, rotiert und das Werkzeug radial oder auch tangential zugestellt werden kann.

Für manche Werkstücke ist aber eine derartige Drehbearbeitung ungeeignet, beispielsweise für Turbinenschaufeln, die bisher häufig relativ zu einer etwa durch sie hindurch in Längsrichtung verlaufenden Achse eingespannt und auch relativ zu dieser Achse bewegt werden, an denen aber ein Fräswerkzeug angreift.

Ein derartiges Bearbeitungsverfahren von Turbinenschaufeln bedarf einer großen Anzahl von Zustellachsen für das Fräswerkzeug und von Drehantrieben sowie aneinander angepassten Antrieben und Steuerungen. Hierbei entsteht die Schnitteschwindigkeit aus der im Vergleich zum Drehen sehr hohen Drehzahl des Werkzeuges von 8000-12000 min⁻¹.

Aus der DE 195 11 420 A1 ist die Fertigung von Kurbelwellen mit versetzt zueinander angeordneten Kurbelzapfen bekannt. Diese Kurbelzapfen werden nacheinander drehbearbeitet, wobei jeweils der zu bearbeitende Kurbelwellenzapfen konzentrisch zu der Achse des Spannfutterkörpers und der Spindelachse ist.

Aus der US 5 396 821 A, die als nächstliegender Stand der Technik angesehen werden kann, sind eine Vorrichtung und ein Verfahren zur Spanbearbeitung von Werkstücken mit kreisrunden, exzentrischen Konturen bekannt, wobei das Werkstück mit seiner Werkstückmitte konzentrisch aufgespannt wird und wobei das Verfahren nur ausgeführt wird, wenn die Werkstückmitte innerhalb der kreisförmigen Kontur liegt.

Aus der US 3 593 603 A ist eine Drehbank zur Herstellung von Werkstücken bekannt, deren Kontur aus einer Überlagerung zweier Kreisbewegungen darstellbar ist. Hierbei wird eine Spannvorrichtung des Werkstücks während der Bearbeitung um eine Achse, die exzentrisch zu der Drehachse des Spannfutters ist, rotiert.

Aus der DE 625 156 C ist eine Vorrichtung zur spanabhebenden Bearbeitung von Werkstücken mit teils mittig, teils außermittig zur Hauptachse der Werkstücke liegenden Umfangsflächen bekannt, bei welcher die jeweils zu bearbeitende Umfangsfläche konzentrisch zur Rotationsachse einer das Werkstück haltenden Planscheibe ausgerichtet wird.

Aus US 5622092 A ist eine Vorrichtung zum Schleifen von Kurbelwellen bekannt, bei der die Werkstückaufnahmen von der Drehachse beabstandet angeordnet werden können, um eine Kurbelwelle für die Bearbeitung der einzelnen Pleuellager so auszurichten, dass das jeweils bearbeitete Pleuellager mittig zur Drehachse angeordnet ist.

Es besteht deshalb die Aufgabe, ein Verfahren der eingangs genannten Art zu schaffen, bei welchem mit weniger Antrieben und Verstellachsen ein von:einem kreisrunden Querschnitt abweichendes Querschnittsprofil hergestellt werden kann.

Zur Lösung dieser Aufgabe sind bei einem Verfahren der eingangs genannten Art die Merkmale des Anspruchs 1 vorgesehen. Insbesondere wird somit vorgeschlagen, dass das Werkstück mit seiner Längsachse parallel zur Drehachse aber-exzentrisch und mit radialem Abstand zur Drehachse in der Spannvorrichtung eingespannt und das Drehwerkzeug radial von außen quer zur Drehachse zugestellt wird, wobei das Werkstück auf einem gedachten Zylinder um die Drehachse kreist, und dass die Kreisgeschwindigkeit der Drehgeschwindigkeit des Werkstücks entspricht und das Werkstück bei einer Kreisbewegung um die zentrale Drehachse eine Umdrehung macht und immer dieselbe Außenseite des Werkstücks während der spanenden Bearbeitung radial nach außen weist.

Somit kann das Werkstück auf einem gedachten Zylinder um die Drehachse kreisen, wobei die Kreisgeschwindigkeit der Drehgeschwindigkeit des Werkstücks entspricht, das heißt bei einer Kreisbewegung des Werkstücks um die zentrale Drehachse oder Drehachse macht es selbst auch eine Umdrehung, so dass immer dieselbe Außenseite auch radial nach außen weist, die nun von dem Werkzeug spanend bearbeitet werden kann. Da die Längsachse des jeweils zu bearbeitenden Bereichs des Werkstücks nicht mit der Drehachse übereinstimmt und so das Bearbeitungsverfahren, bedingt durch eine außermittige Einspannung zu einem unterbrochenen Drehprozess führt, wird nicht der gesamte Umfang des Werkstücks an der Bearbeitungsstelle drehend bearbeitet, sondern nur die Außenseite des auf der zylindrischen Kreisbahn umlaufenden Werkstücks.

Die Erfindung kann somit gegenüber den bekannten Verfahren mit weniger Zustellachsen auskommen. Von Vorteil ist dabei weiter, dass sich die für die Spanbearbeitung erforderliche Relativgeschwindigkeit zwischen Werkzeug und Werkstück nicht wie bei den bekannten Verfahren aus der Geschwindigkeit der Eigenrotation des Werkstücks um seine Längsachse ergibt, sondern dass sie aus der Umlaufgeschwindigkeit des Werkstücks um die Drehachse und dem radialen Abstand des Werkstücks von der Drehachse resultiert. Es können somit auch Konturen gefertigt werden, die bei einer Aufspannung des Werkstücks in einer Vorrichtung der bekannten Art zur Folge hätten, dass der zu bearbeitende Bereich am Werkstück das Werkzeug aufgrund der Eigenrotation des Werkstücks um die Drehmitte bei einer von der Kreisform abweichenden Kontur überholen will, was zur Zerstörung von Werkstück und/oder Werkzeug führen würde. Es ist daher eine viel größere Zahl von Konturen der Drehbearbeitung zugänglich.

Eine Ausgestaltung der Erfindung kann vorsehen, dass während einer Umdrehung des Werkstücks immer dieselbe Außenseite oder derselbe Oberflächenbereich radial nach außen zeigt. Somit können auf einfache Weise Werkstücke gefertigt werden, die im Bereich der Außenfläche eine Krümmung mit verhältnismäßig großem Krümmungsradius und in den an diese Außenfläche angrenzenden Oberflächenbereichen eine Krümmung mit demgegenüber kleinen Krümmungsradius, beispielsweise abgerundete Kanten oder Übergangsbereiche, aufweisen. Durch die exzentrische Aufspannung in radialem Abstand zur Drehachse kann das Werkzeug einfach in die Außenfläche zur Bearbeitung radial eingeführt und aus dieser herausgeführt werden und es kann vermieden werden, dass die Schnittgeschwindigkeit einen kritischen Wert unter-/überschreitet.

Konkave und/oder konvexe, von einem Zylindermantelausschnitt abweichende Außenkonturen der Oberfläche des Werkstücks können gefertigt werden, wenn das Drehwerkzeug während einer Umdrehung des Werkstücks in unterschiedliche radiale Abstände von der Drehachse verfahren wird. Insbesondere wird somit die radiale Position des Drehwerkzeugs in Bezug auf die Drehachse während eines Spanabhubs derart geändert, dass sich eine Oberflächenkontur am Werkstück ergibt, die von der Gestalt eines Zylindermantelausschnitts abweicht, die also keinen Zylindermantelausschnitt beschreibt.

Hierzu kann vorgesehen sein, dass die Zustellbewegung des Drehwerkzeugs synchron mit der Rotation des Werkstücks ausgeführt wird. Von Vorteil ist dabei, dass das gewünschte Fertigungsmaß durch mehrere Bearbeitungsvorgänge erzeugt werden kann, die während der Umdrehungen der Spannvorrichtung aufeinander folgen. Dies gleicht einem unterbrochenen Schnitt, da die Bearbeitung des Zylindermantelausschnitts bei einem Werkstück oder zwei Werkstücken nur in einem bestimmten Bereich während einer Umdrehung stattfindet.

Zur Fertigung von eine Längsrichtung aufweisenden Werkstücken kann vorgesehen sein, dass das Drehwerkzeug und das Werkstück während der Drehbearbeitung zusätzlich parallel zur Drehachse relativ zueinander verfahren werden. Hierbei kann das Drehwerkzeug oder das Werkstück mit der Spannvorrichtung raumfest verbleiben, oder es können sowohl das Drehwerkzeug als auch das Werkstück mit der Spannvorrichtung gleichzeitig gegeneinander verfahren werden.

Um komplexere Profile oder Konturen zu fertigen, die beispielsweise durch wenigstens zwei Oberflächen beschrieben werden, die an einer Kante oder Rundung zusammentreffen, kann vorgesehen sein, dass das Werkstück nach der Drehbearbeitung der radial nach außen weisenden Oberflächenbereiche in der Spannvorrichtung derart lageverändert wird, dass bisher radial nach innen weisende Oberflächenbereiche nach außen weisen, und dass die nun nach außen weisenden Oberflächenbereiche drehbearbeitet werden. Diese Lageveränderung kann beispielsweise durch Verschieben und/oder Verdrehen und/oder Umspannen erfolgen. Insbesondere können so Tragflächen- oder Turbinenschaufelprofile gefertigt werden, indem zunächst die eine Seitenfläche, also die Vorder- oder Oberseite, und in einem anschließenden Arbeitsgang die andere Seitenfläche, also die Rück- oder Unterseite, bearbeitet wird. Es kann somit ein Werkstück mit einer Seitenfläche mit konkavem Profil und einer Seitenfläche mit konvexem Profil in einer Aufspannung gefertigt werden.

Alternativ oder zusätzlich kann vorgesehen sein, dass zum Lageverändern das Werkstück in der Spannvorrichtung auf einer in einer Radialebene liegenden Strecke, vorzugsweise auf einer durch die Drehachse verlaufenden Strecke und/oder auf die in Bezug auf die Drehachse gegenüberliegende Seite, verfahren wird. Somit wird das Werkstück in eine Position an der Spannvorrichtung verfahren, in welcher die ursprünglich beim ersten Bearbeitungsgang nach innen weisende und damit Drehwerkzeugen nicht zugängliche Oberfläche radial nach weist und daher radial von außen angreifenden Drehwerkzeugen zugänglich ist und somit in deren Arbeitsbereich gebracht wird.

Es kann auch vorgesehen sein, dass zum Lageverändern das Werkstück zwischen einer radial zur Drehachse beabstandeten und einer in Bezug auf die Drehachse mittigen Position verfahren wird. In dieser mittigen Position, in welcher die Drehachse durch das Werkstück verläuft, können beispielsweise für komplexe Profile Zwischenbearbeitungsschritte ausgeführt werden.

Es kann auch vorgesehen sein, dass zum Lageverändern das Werkstück in der Spannvorrichtung um einen Drehwinkel, insbesondere um 180°, um die Längsachse gedreht wird.

Besonders kurze Fertigungszeiten können erreicht werden, wenn an der rotierenden Spannvorrichtung wenigstens zwei Werkstücke aufgespannt werden und wenn die wenigstens zwei Werkstücke in einem gemeinsamen Arbeitsgang drehbearbeitet werden.

Zur Fertigung der Fuß- oder Befestigungsbereiche von Turbinenschaufeln und/oder von Querschnittsverdickungen längs der Längsachse kann vorgesehen sein, dass das Drehwerkzeug mit seiner Zustellrichtung während der Drehbearbeitung in einer radialen und/oder in einer die Drehachse einschließenden Ebene verschwenkt wird.

Für eine gleichzeitige Bearbeitung mehrerer Werkstücke kann vorgesehen sein, dass wenigstens zwei Drehwerkzeuge verwendet werden, die während einer Drehbearbeitung an dem Werkstück angreifen.

Die Vorteile der Erfindung kommen besonders zu Geltung, wenn wenigstens ein unrundes, insbesondere ein einen quer zu seiner Längsachse einen flachen Querschnitt aufweisendes, Werkstück gefertigt wird. Beispiele hierfür sind Turbinenschaufeln oder Tragflächenprofile.

Zur Fertigung kann ein Rohling mit Freiform, insbesondere mit rechteckigem, rundem oder ellipsenförmigem Ausgangsquerschnitt quer zu seiner Längsachse drehbearbeitet werden.

Um eine Annäherung an die Endform kostengünstig und mit geringem Zeitaufwand zu erreichen, kann vorgesehen sein, dass zur Drehbearbeitung zuerst ein Schruppen und anschließend ein Schlichten durchgeführt werden. Hierbei bezeichnet Schruppen typischerweise einen Fertigungsvorgang mit großem Spanabhub, während unter Schlichten die Feinbearbeitung mit geringem Spanabhub verstanden wird. Schruppen und Schlichten können in einer Aufspannung oder auf getrennten Maschinen durchgeführt werden.

Es kann hierzu erforderlich sein, dass während des Schruppens ein Drehrichtungswechsel der Spannvorrichtung ausgeführt wird.

Es kann vorgesehen sein, dass während des Schruppens der radiale Abstand des Werkzeugs zur Drehachse der Spannvorrichtung über eine Umdrehung unverändert bleibt. Eine noch bessere Annäherung an eine im Querschnitt unrunde Endform kann erreicht werden, wenn auch das Werkzeug für den Schruppvorgang während des Spanabhubs radial verfahren wird. Beispielsweise kann hierbei der Abstand zunächst konstant gehalten werden, und es kann mit fortschreitender Bearbeitung eine radiale Zustellung erfolgen.

Es kann somit vorgesehen sein, dass beim Schruppen dem Werk-Werkstück eine Form gegeben wird, die nahe an der Fertigkontur liegt. Hierbei kann die Annäherung in Abhängigkeit von der Krümmung des Werkstücks in der Endform und/oder der Größe des Werkstücks gewählt werden. Beispielsweise kann der Rohling bis auf 1/2 mm oder sogar 1/10 mm Abweichung von der Endform durch Schruppen gefertigt werden.

Durch die radiale Versetzung des Werkstücks aus der Drehachse können bereits ausreichende Schnittgeschwindigkeiten erreicht werden, wenn die Rotation des Werkstücks mit wenigstens 5 U/min, vorzugsweise wenigstens 10 U/min, ausgeführt wird.

Bei einer Ausgestaltung der Erfindung kann vorgesehen sein, dass in einer Aufspannung bei einem ersten Werkstück einerseits und einem zweiten Werkstück andererseits unterschiedliche Oberflächenbereiche, insbesondere mit unterschiedlich gekrümmten, quer zur jeweiligen Längsachse verlaufenden Konturen, bearbeitet werden. Es können so beispielsweise zwei Werkzeuge vorgesehen sein, von denen eines für die Bearbeitung einer konkaven und das andere für die Bearbeitung einer konvexen Kontur eingerichtet ist, oder es kann das Werkzeug ohne mechanisch besonders aufwendige, besonders schnelle Rückholbewegungen während einer Umdrehung der Spannvorrichtung so geführt werden, dass in einer Hälfte einer jeden Umdrehung eine radial weiter außen liegende Kontur an dem einen Werkstück und in der anderen Hälfte der Umdrehung eine radial weiter innen liegende Kontur an dem anderen Werkstück durch das Werkzeug bearbeitet werden.

Zur Lösung der Aufgabe sind bei einer Drehbearbeitungsvorrichtung der eingangs genannten Art die Merkmale von Anspruch 20 vorgesehen. Insbesondere wird somit vorgeschlagen, dass die Spannvorrichtung eine exzentrisch mit radialem Abstand zur Drehachse der Drehspindel angeordnete Werkstückaufnahme aufweist, und dass eine Synchronisationseinrichtung vorgesehen ist, welche die Zustellbewegung des Werkzeugträgers mit der Rotation der Drehspindel synchronisiert. Von Vorteil ist dabei, dass Werkstücke mit unrunden Querschnitten, also Profilen oder Konturen längs zu ihrer in Aufspannposition parallel zu Drehachse ausgerichteten Längsachse, gefertigt werden können, wobei im Gegensatz zu den bekannten Vorrichtungen und Verfahren die für Spanbearbeitungen erforderliche Mindestschnittgeschwindigkeit keine oder im Wesentlichen keine Begrenzung an die fertigbaren Krümmungsradien des Profils oder der Kontur darstellt. Vielmehr ergibt sich mit der Erfindung immer eine Schnittgeschwindigkeit größer Null.

Für eine genaue Führung des Werkstücks während der Spanbearbeitung und die Vermeidung von fliehkraft- oder unwuchtbedingten Schwingungen des Werkstücks kann vorgesehen sein, dass die Spannvorrichtung eine um die Drehachse der Drehspindel rotierbare Reitstockpinole mit einer Gegenaufnahme für das von der Drehspindel abgewandte Ende des Werkstücks aufweist.

Zusätzlich oder alternativ kann vorgesehen sein, dass die Spannvorrichtung einen Unwuchtausgleich für das eingespannte Werkstück aufweist.

Eine bevorzugte Ausführungsform kann vorsehen, dass der Unwuchtausgleich und die Werkstückaufnahme synchron verfahrbar angeordnet sind. Vorzugsweise sind Unwuchtausgleich und Werkstückaufnahme radial verfahrbar. Hierzu sind an der Spannvorrichtung und/oder an der Drehbearbeitungsvorrichtung mechanische und/oder elektronische Synchronisierungsmittel ausgebildet. Von Vorteil ist dabei, dass der Unwuchtsausgleich nicht neu justiert werden muss, wenn die Position des Werkstücks in der Spannvorrichtung zur Bearbeitung weiterer Oberflächen verändert wird.

Besonders günstig ist es, wenn der Unwuchtausgleich durch ein weiteres, eingespanntes Werkstück gebildet ist. Es kann vorgesehen sein, dass die Werkstücke synchron lageveränderbar angeordnet sind.

Hierzu kann vorgesehen sein, dass die Spannvorrichtung eine bezüglich der Drehachse der Drehspindel drehsymmetrische Anordnung von wenigstens zwei Werkstückaufnahmen aufweist.

Eine Lageänderung der Werkstücke in Bezug auf die Spannvorrichtung, ohne diese zu lösen und das Werkstück zu entfernen, kann durchgeführt werden, wenn die Werkstückaufnahme und/oder die Gegenaufnahme um eine parallel zur Drehachse der Drehspindel ausgerichteten Achse drehbar verfahrbar angeordnet ist/sind. Alternativ oder zusätzlich kann vorgesehen sein, dass die Werkstückaufnahme und/oder die Gegenaufnahme quer zur Drehachse verfahrbar angeordnet ist/sind. Hierzu können beispielsweise Führungsmittel für einen Verfahrweg, welcher die Drehachse schneidet, und/oder einen Verfahrweg, welcher auf die in Bezug auf die Drehachse oder eine Axialebene gegenüberliegende Seite führt, ausgebildet sein.

Zur weiteren Verbesserung der Laufgenauigkeit des in der Spannvorrichtung angeordneten Werkstücks kann vorgesehen sein, dass die Reitstockpinole durch einen Drehantrieb antreibbar ist.

Besonders günstig ist es dabei, wenn eine weitere Synchronisationseinrichtung vorgesehen ist, mit welcher die Rotation der Drehspindel mit der Rotation der Reitstockpinole synchronnisierbar ist. Beispielsweise kann die Synchronisationseinrichtung elektronische oder mechanische Synchronisationsmittel aufweisen.

Für ein mehrschrittiges Fertigungsverfahren kann zusätzlich eine Bearbeitungseinheit zur Schruppbearbeitung vorgesehen sein.

Komplexe Profile, beispielsweise mit Querschnittsverdickungen entlang der Längsachse des Werkstücks, können gefertigt werden, wenn der Werkzeugträger um eine windschief zur Drehachse der Drehspindel ausgerichtete Achse, insbesondere um eine in einer Radialebene liegende Achse, schwenkbar angeordnet ist. Hierbei sind zwei mathematische Achsen windschief zueinander, wenn sie weder parallel zueinander verlaufen noch sich schneiden.

Zur Fertigung von langgestreckten Werkstücken kann vorgesehen sein, dass der Werkzeugträger und die Werkstückaufnahme zusätzlich parallel zur Drehachse der Drehspindel gegeneinander verfahrbar angeordnet sind. Hierbei kann der Werkzeugträger oder die Werkstückaufnahme raumfest angeordnet sein oder es können beide zum gleichzeitigen gegenläufigen Verfahren eingerichtet sein.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination einzelner und/oder mehrerer Merkmale der Ansprüche untereinander und/oder mit einzelnen und/oder mehreren Merkmalen der Ausführungsbeispiele.

Es zeigt in teilweise schematischer Darstellung
- Fig. 1: eine Gesamtansicht einer erfindungsgemäßen Drehbearbeitungsvorrichtung schräg von oben,
- Fig. 2: die Drehbearbeitungsvorrichtung gemäß Fig.1 von vorn,
- Fig. 3: Spindelstock, Reitstock und Werkzeug der Drehbearbeitungsvorrichtung gemäß Fig.1 in einer Schrägansicht von oben mit eingespannten Werkstücken,
- Fig. 4: Spindelstock, Reitstock und Werkzeug gemäß Fig.3 in einer Schrägansicht von unten,
- Fig. 5: Werkstückaufnahme und Gegenaufnahme aus Fig.4 mit eingespanntem Werkstück und Drehwerkzeug schräg von unten,
- Fig. 6: verschiedene Arbeitspositionen des eingespannten Werkstücks,
- Fig. 7: eine Ansicht von vorn auf Spindelstock, Reitstock und Werkzeugträger gemäß Fig.3,
- Fig. 8: eine Schnittansicht von Fig.7 entlang B-B,
- Fig. 9: eine Detailansicht von Fig.8,
- Fig. 10: den Unwuchtausgleich bei Lageveränderung des eingespannten Werkstücks,
- Fig. 11: das relative Verfahren von Werkstück und Werkzeug gegeneinander längs der Drehachse,
- Fig. 12: das relative Verschwenken von Werkstück und Werkzeug gegeneinander um eine Achse senkrecht zur Drehachse,
- Fig. 13: das relative Verschwenken von Werkstück und Werkzeug gegeneinander um eine Achse parallel zur Drehachse,
- Fig. 14: einen Rohling mit kreisrundem Querschnitt,
- Fig. 15: einen Rohling mit rechteckigem Querschnitt,
- Fig. 16: eine Turbinenschaufel mit Querschnittsverdickung,
- Fig. 17: eine weitere Turbinenschaufel,
- Fig. 18: bis
- Fig. 20: Werkzeuge zur Verwendung in der Drehbearbeitungsvorrichtung gemäß Fig.1,
- Fig. 21: die erfindungsgemäße Bearbeitung einer Querschnittsverdickung in einer Ansicht von vorn und
- Fig. 22: die erfindungsgemäße Bearbeitung gemäß Fig.21 in einer Schrägansicht von unten.

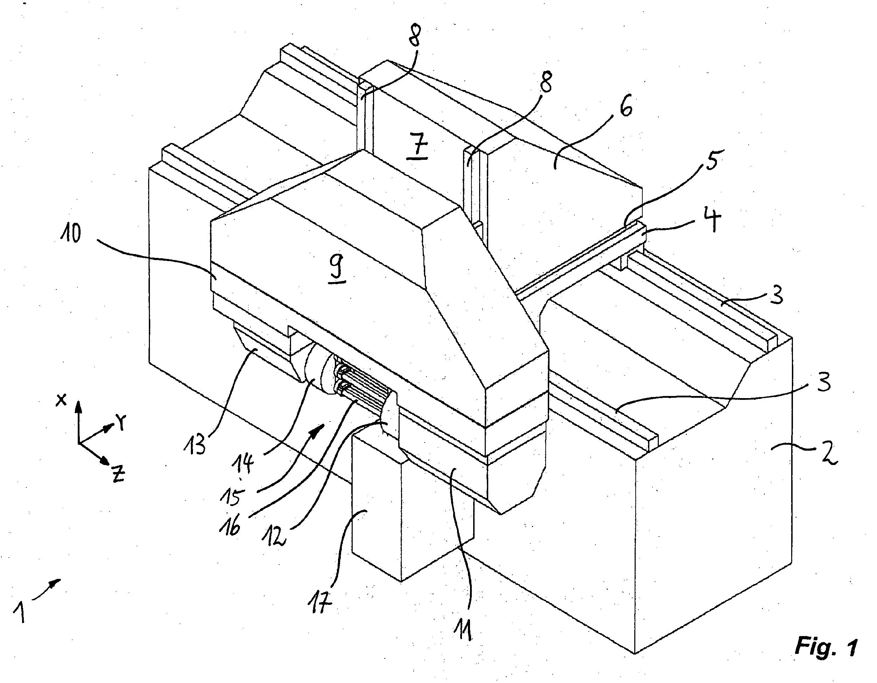

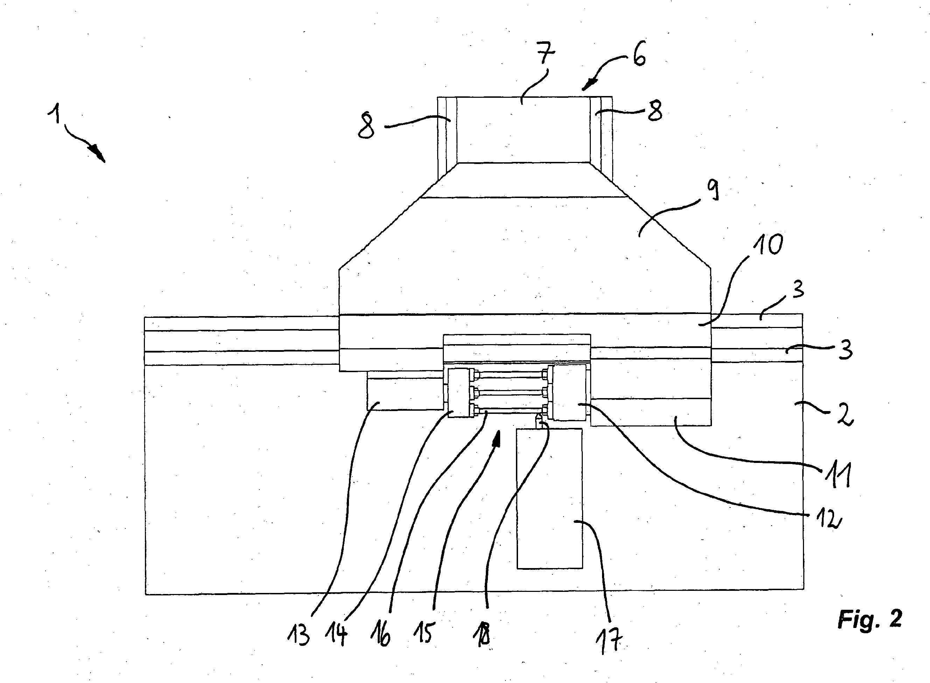

Fig. 1 zeigt eine im Ganzen mit 1 bezeichnete Drehbearbeitungsvorrichtung in einer Ansicht schräg von oben. Fig. 2 zeigt die Drehbearbeitungseinrichtung 1 in einer Ansicht von vorn.

Die Drehbearbeitungseinrichtung 1 hat ein Maschinenbett 2, auf welchem zwei parallel verlaufende, horizontale Linearführungen 3 angeordnet sind. Auf den Linearführungen 3 ist ein Schlitten 4 horizontal in Z-Richtung, also in Fig. 2 in der Zeichenebene, verfahrbar. Die hierzu erforderlichen Antriebsmittel sind nicht weiter dargestellt.

Auf dem Schlitten 4 sind zwei weitere, ebenfalls parallel verlaufende und horizontal ausgerichtete Linearführungen 5 angeordnet. In Fig. 1 ist nur eine der Linearführungen 5 ersichtlich. Die Linearführungen 5 definieren einen Verfahrweg, der senkrecht zu dem Verfahrweg ausgerichtet ist, welcher durch die Linearführungen 3 definiert ist.

Auf den Linearführungen 5 ist ein weiterer Schlitten 6 verfahrbar angeordnet, der somit in Y-Richtung entlang den Linearführungen 5 mit nicht weiter dargestellten Antriebsmitteln verfahren werden kann.

An der Vorderseite 7 des Schlittens 6 ist ein weiteres Paar von Linearführungen 8 angeordnet, die parallel und vertikal verlaufen.

An diesen Linearführungen 8 ist ein Vertikalschlitten 9 geführt, welcher somit in X-Richtung, also vertikal verfahren werden kann, wobei die erforderlichen Antriebsmittel ebenfalls nicht weiter dargestellt sind. Die Linearführungen 3, 5 und/oder 8 können Schienen umfassen.

An dem Vertikalschlitten 9 ist eine Traverse oder ein Aufbauschlitten 10 um eine vertikale Schwenkachse schwenkbar aufgehängt.

An dem Aufbauschlitten 10 ist ein Spindelstock 11 mit dem Spannfutter 12 einer nicht weiter dargestellten Drehspindel und ein Reitstock 13 mit einer Reitstockpinole 14 ausgebildet. Es ist ein nicht weiter ersichtlicher Antrieb vorgesehen, mit welcher die Drehspindel mit dem Spannfutter 12 um eine Drehachse in rotiert werden kann.

Zwischen Spannfutter 12 und Reitstockpinole 14 ist somit eine Spannvorrichtung 15 ausgebildet, welche eine Spannstelle für ein Werkstück 16 bildet. Das eingespannte Werkstück 16 kann dann durch den Antrieb des Spannfutters 12 um die Dreh- oder Rotationsachse der Spindel für eine Drehbearbeitung rotiert werden.

An dem Maschinenbett 2 ist eine Werkzeugzustelleinrichtung 17 fest angeordnet, welche ein Werkzeug 18 bereitstellt, das an dem Werkstück 16 während der Drehbearbeitung angreift.

Bei der Drehbearbeitungsvorrichtung 1 ist somit die Werkzeugzustelleinrichtung 17 raumfest angeordnet, während die Spannvorrichtung 15 mit dem Aufbauschlitten 10 in X-, Y- und Z-Richtung beliebig verfahrbar und um die erwähnte Schwenkachse der Aufhängung des Aufbauschlittens 10 verschwenkbar angeordnet ist.

Bei weiteren Ausführungsbeispielen ist der Aufbauschlitten 10 nicht aufgehängt, sondern aufgestellt, und/oder es ist vorgesehen, dass die Werkzeugzustelleinrichtung 17 in eine Raumrichtung oder mehrere Raumrichtungen verfahrbar und/oder der Aufbauschlitten 10 raumfest angeordnet ist.

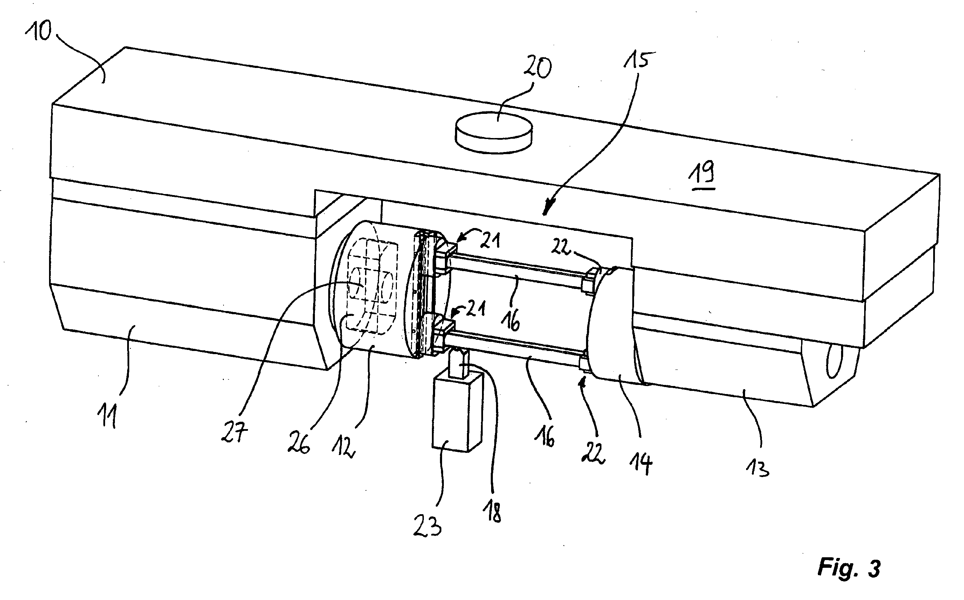

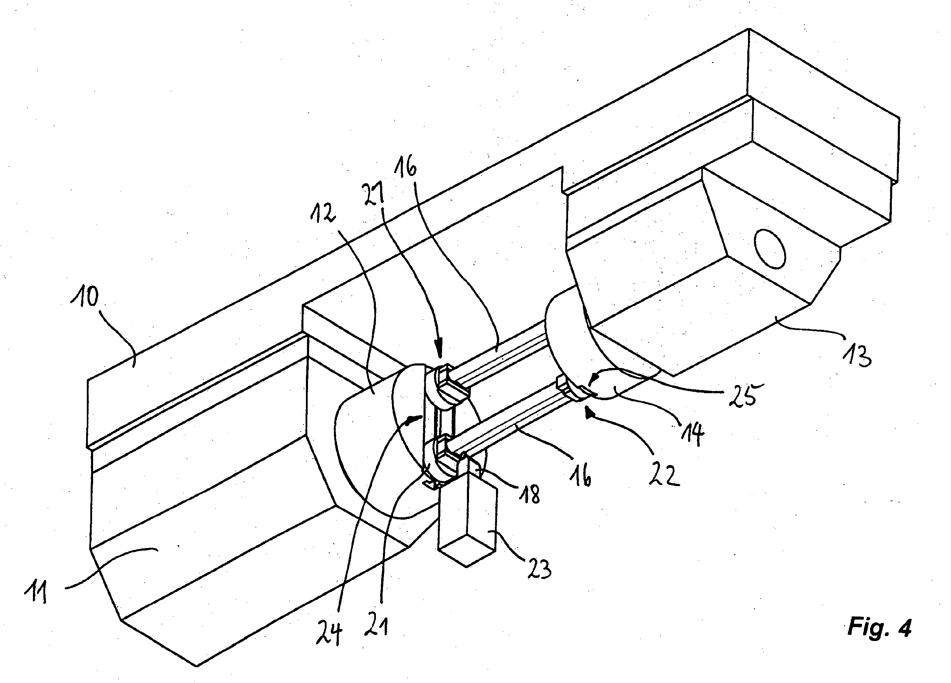

Fig. 3 zeigt den Aufbauschlitten 10 mit der Spannvorrichtung 15 in einer Ansicht schräg von oben, Fig. 4 in einer Ansicht schräg von unten.

An seiner Oberseite 19 weist der Aufbauschlitten 10 einen Ansatz 20 auf, an welchem die Aufhängung des Aufbauschlittens 10 an dem Vertikalschlitten 9 angreift und durch welchen die Schwenkachse des Aufbauschlittens 10 definiert wird. Der hierfür vorgesehene Antrieb ist zur besseren Übersichtlichkeit der Darstellung nicht weiter gezeigt.

In Fig. 3 sind zwei Werkstücke 16 in der Spannvorrichtung 15 symmetrisch und unwuchtfrei eingespannt. Hierzu sind an dem Spannfutter 12 zwei Werkstückaufnahmen 21 angeordnet, an denen die Werkstücke 16 jeweils mit einem Ende eingespannt sind. Mit ihrem anderen Ende sind die Werkstücke 16 an entsprechenden Gegenaufnahmen 22 eingespannt, die an der Reitstockpinole 14 angeordnet sind.

Das Werkzeug 18 ist auf einem Werkzeugträger 23 angeordnet, welcher durch die Werkzeugzustelleinrichtung 17 radial in Bezug auf die Drehachse dem Spannfutter 12, im folgenden die Drehachse, verfahren und radial und/oder tangential zugestellt werden kann. Wird diese Verstellbewegung während des Spanabhubs am Werkzeug 18 synchron mit der Rotation des Spannfutters 12 ausgeführt, so können an den Werkstücken 16 Oberflächen spanend gefertigt werden, die nicht auf einer zu der Drehachse konzentrischen Zylindermantelfläche liegen. Es können somit nahezu beliebig unrunde Werkstücke 16 gefertigt werden.

Die Werkstückaufnahmen 21 und die Gegenaufnahmen 22 sind jeweils beispielsweise in Nuten 24, 25 geführt und können zwischen den Bearbeitungsschritten radial verstellt werden, um die Werkstücke näher an die Drehachse oder weiter von dieser weg anzuordnen.

Um beispielsweise durch eine unsymmetrische Anordnung von einem Werkstück 16 oder mehreren Werkstücken 16 bedingte Unwuchten auszugleichen, ist an dem Spannfutter 12 in einer Ausnehmung 26 ein Unwuchtausgleich 27 in Form einer radial verschieblichen Masse vorgesehen.

In dieser Anmeldung werden die Begriffe radial und axial in Bezug auf die Drehachse der Drehspindel und des Spannfutters 12 gebraucht.

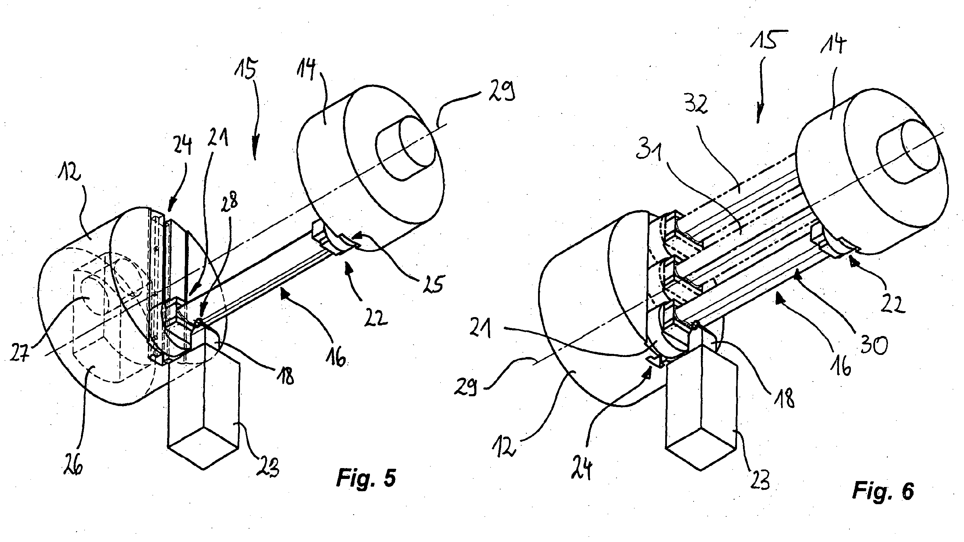

Fig. 5 zeigt ein in die Spannvorrichtung 15 eingespanntes Werkstück 16 während der Spanbearbeitung durch die Schneide 28 des Werkzeugs 18.

Das Werkstück 16 weist eine Längsachse auf, die sich zwischen der Werkstückaufnahme 21 und der Gegenaufnahme 22 erstreckt und die parallel zur Drehachse 29 ausgerichtet ist. Das Werkstück 16 ist exzentrisch mit radialem Abstand zu der Drehachse 29 eingespannt, weshalb die Drehachse 29 nicht durch das Werkstück 16 verläuft. Zum Ausgleich der hierdurch bedingten Unwucht ist der Unwuchtausgleich 27 ebenfalls radial gegenüber der Drehachse 29 versetzt angeordnet.

Die radiale Position des Werkzeugs 18 in Bezug auf das Werkstück 16 wird nun während einer Umdrehung des Werkstücks 16 um die Drehachse so gesteuert, dass sich nach dem Spanabhub das dargestellte unrund Profil am Werkstück 16 ergibt. Es können so auch Tragflächenprofile gefertigt werden.

Fig. 6 zeigt beispielhaft ein weiteres Werkstück 16, welches mit der Drehbearbeitungsvorrichtung 1 gefertigt werden kann. Bei diesem Werkstück 16 wird das Werkzeug 18 während der Spanbearbeitung derart radial verstellt, dass an dem Werkstück ein in der gezeigten eingespannten Position radial nach außen zeigender Oberflächenbereich 30 ausgebildet wird, welcher eine bereichsweise konkave Kontur aufweist.

Für weitere Bearbeitungsschritte kann die Lage des Werkstücks 16 in der Spannvorrichtung 15 verändert werden, indem das Werkstück 16 in eine zweite radiale Position 31 mittig zur Drehachse 29 oder eine dritte radiale Position 32 auf der diametral gegenüberliegenden Seite oder in eine Zwischenposition verfahren wird. Die Positionen 31, 32 sind hierbei nur beispielhaft gezeigt. Es können auch beliebige, frei definierbare Positionen eingenommen werden.

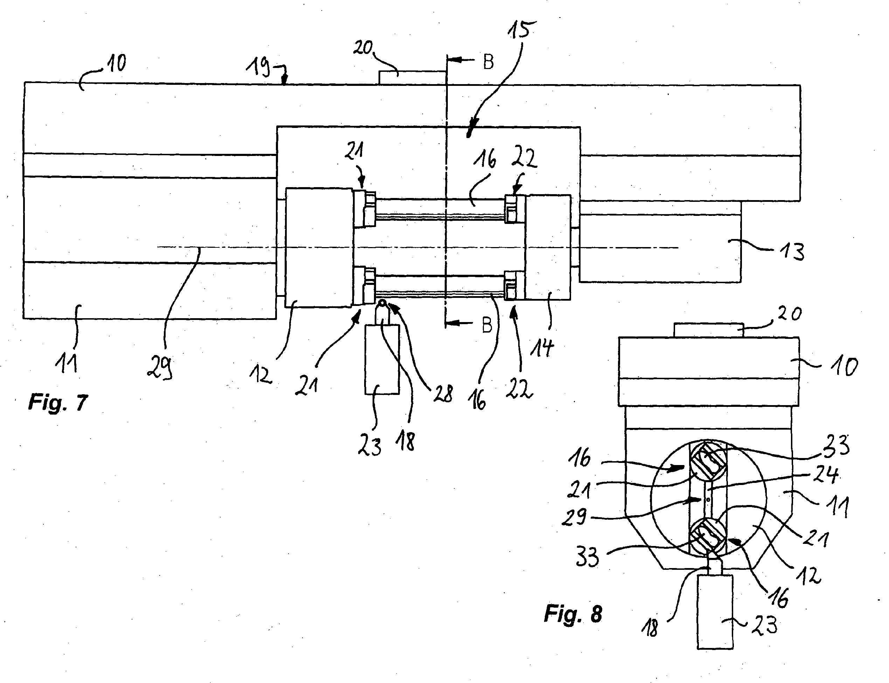

Fig. 7 zeigt eine Ansicht von vorn mit zwei identischen Werkstücken 16, welche in der Spannvorrichtung 15 zur Drehbearbeitung eingespannt sind.

Fig. 8 zeigt eine Schnittansicht entlang der Schnittebene B-B in Fig. 7. Die unrunde Kontur des Profils 33 der Werkstücke 16 ist deutlich erkennbar.

Es ist ebenfalls ersichtlich, dass innerhalb einer Umdrehung der Werkstücke 16 um die Drehachse 29 durch das Werkzeug 18 an den Werkstücken 16 jeweils unterschiedliche Oberflächenbereiche bearbeitet werden, die sich nicht entsprechen, obwohl die Profile 33 der Werkstücke 16 einander gleichen.

Zum Bearbeiten anderer Oberflächenbereiche muss die Lage der Werkstücke 16 in der Spannvorrichtung 15, also relativ zu der Drehspindel mit dem Spannfutter 12, verändert werden, beispielsweise durch Schwenken der Werkstückaufnahmen 21 und Gegenaufnahmen 22 um die Längsachse der Werkstücke 16 und/oder durch radiales Verfahren der Werkstücke 16, wie oben beschrieben.

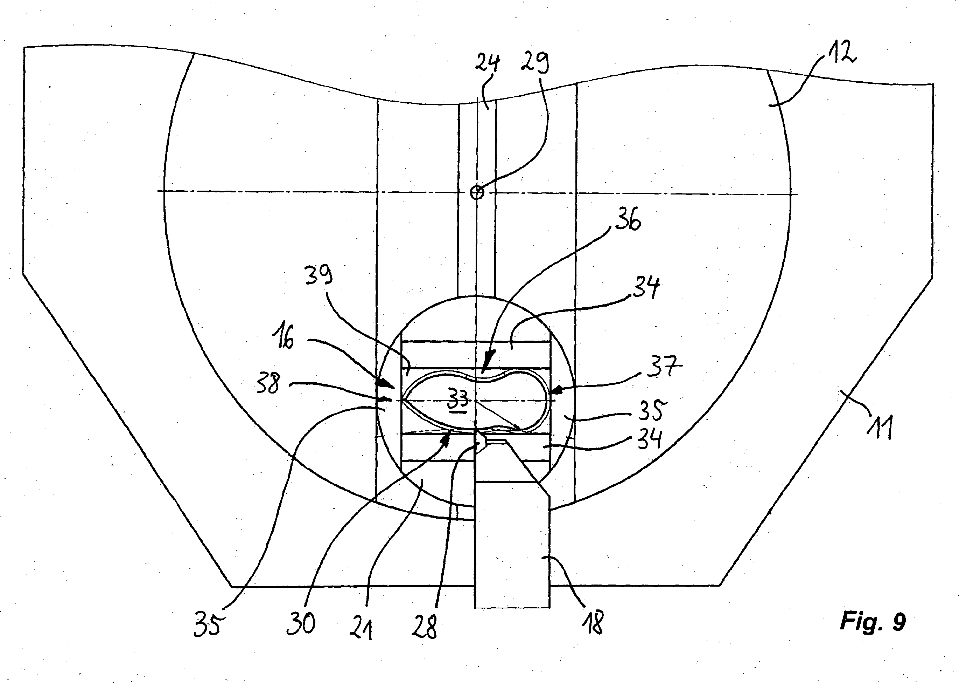

Fig. 9 zeigt eine Detailansicht von Fig. 8, wobei das Werkstück 16 um seine Längsachse um einen Winkel gegenüber der Position in Fig. 8 verschwenkt wurde.

Das Werkstück 16 wird durch verstellbare Spannbacken 34 an seinem Ende oder Fuß 39 zweiseitig eingespannt, wobei die Spannbacken 34 in Führungselementen 35 linear geführt sind.

Die dargestellte Kontur des Oberflächenbereichs 30 an dem Werkstück 16 kann gefertigt werden, indem der radiale Abstand des Werkzeugs 18 und insbesondere der Schneide 28 in Bezug auf die Drehachse 29 während des Spanabhubs am Werkstück 16 entsprechend variiert wird. Hierzu synchronisiert eine nicht weiter dargestellte Synchronisationseinrichtung die Rotation des Werkstücks 16 um die Drehachse 29 mit der Zustellbewegung des Werkzeugs 18.

Um auch den in der gezeigten Aufspannung radial nach innen weisenden Oberflächenbereich 36 mit dem Werkzeug 18 bearbeiten zu können, muss die Lage des Werkstücks 16 in der Spannvorrichtung 15 verändert werden, beispielsweise durch Schwenken um die senkrecht auf der Zeichenebene von Fig. 8 stehende Längsachse des Werkstücks 16 um einen Winkel von 180° oder durch ein Verfahren des Werkstücks 16 auf die in Bezug auf die Drehachse 29 diametral gegenüberliegende Position.

Es können somit nahezu beliebige, auch unsymmetrische, Konturen von Profilen 33 gefertigt werden, welche sich aus in aufeinanderfolgenden Bearbeitungsschritten bearbeiteten Oberflächenbereichen 30, 36 zusammensetzen. Hierbei können diese Oberflächenbereiche 30, 36 in gerundeten Übergangsbereichen 37 oder an Kanten 38 aneinander angrenzen.

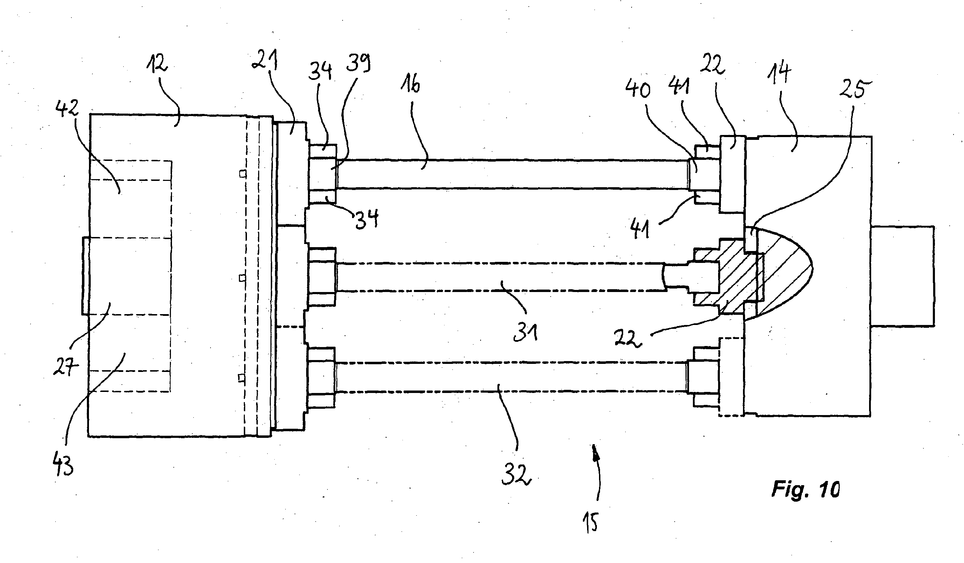

Fig. 10 zeigt das eingespannte Werkstück 16 in den drei Positionen gemäß Fig. 6 in einer Ansicht von vorn.

Das Werkstück 16 ist jeweils mit seinem Kopf 40 in Spannbacken 41 der Gegenaufnahme 22 eingespannt. Die Spannbacken 41 sind prinzipiell wie die Spannbacken 34 ausgeführt und verfahrbar angeordnet.

In einer teilweise aufgeschnittenen Darstellung ist gezeigt, dass die Gegenaufnahmen 22 in der Nut 25 für eine radiale Verstellung geführt werden.

Für den beschriebenen Ausgleich der Unwucht wird der Unwuchtausgleich 27 in gegenüber der mittigen Position exzentrisch versetzte Position 42, 43 synchron mit dem Werkstück 16 verfahren. Hierzu weist die Drehbearbeitungsvorrichtung 1 eine nicht weiter gezeigte mechanische und/oder elektronische Synchronisationseinrichtung auf.

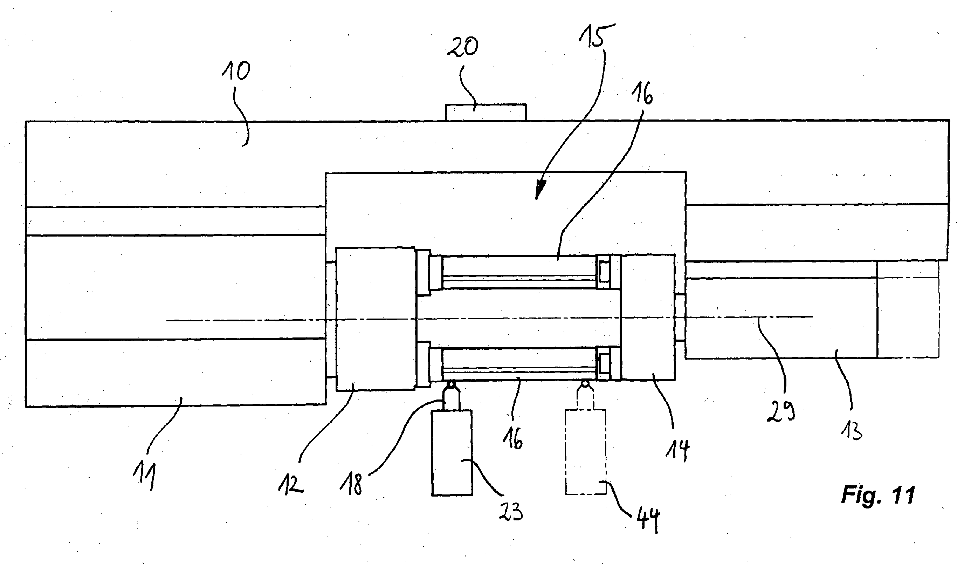

Fig. 11 zeigt in einer Ansicht von vorn, wie das Werkstück 16 mit der Werkstückaufnahme 21 gegen das Werkzeug 18 längs zur Drehachse 29 und zur Längsachse des Werkstücks 16 verfahren werden kann, um eine Drehbearbeitung weiterer axialer Abschnitte des Werkstücks 16 durchzuführen. Es ergibt sich somit eine geänderte axiale Position 44 des Werkzeugträgers 18 in Bezug auf das Werkstück 16. Hierbei kann das Werkzeug 18 raumfest verbleiben und es kann vorgesehen sein, dass sich des gefertigte Profil 33 des Werkstücks 16 längs seiner Längsachse ändert.

In Fig. 11 ist ferner ersichtlich, dass der Reitstock 13 längs der Drehachse 29 in Bezug auf den Aufbauschlitten 10 an diesem Aufbauschlitten 10 verfahrbar angeordnet ist, um unterschiedliche Längen des Werkstücks 16 zuzulassen.

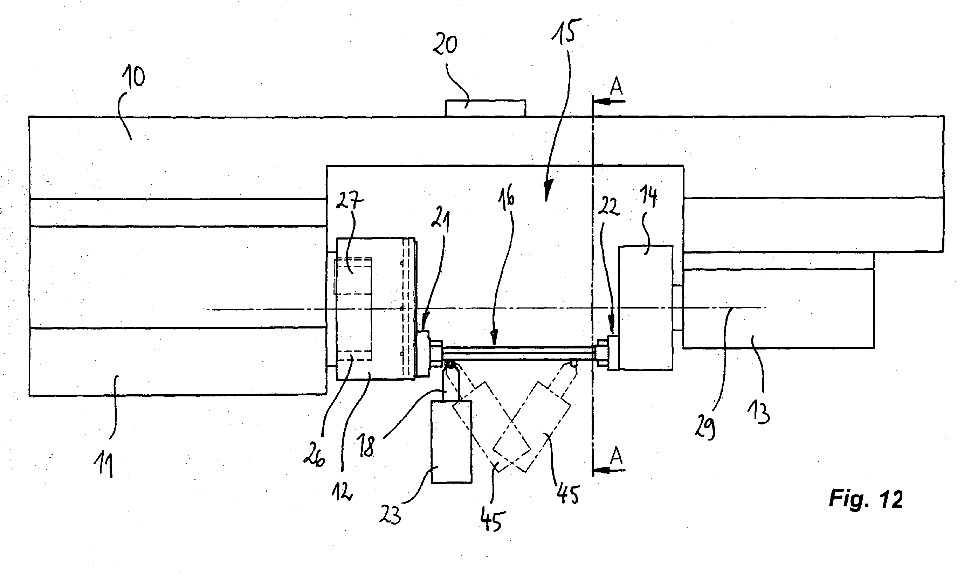

Fig. 12 zeigt, dass der Werkzeugträger 23 mit dem Werkzeug 18 um eine Schwenkachse, die in einer Radialebene liegt und in Fig. 12 senkrecht auf der Zeichenebene steht, geschwenkt werden kann, wenn es das zu fertigende Profil des Werkstück 16 erfordert. Diese Schwenkbewegung kann beispielsweise durch Schwenken des Aufbauschlittens 10 um seine Schwenkachse ausgeführt werden. Dargestellt sind beispielhaft verschiedene Positionen 45 des Werkzeugträgers 23, wobei auch Zwischenpositionen eingenommen werden können.

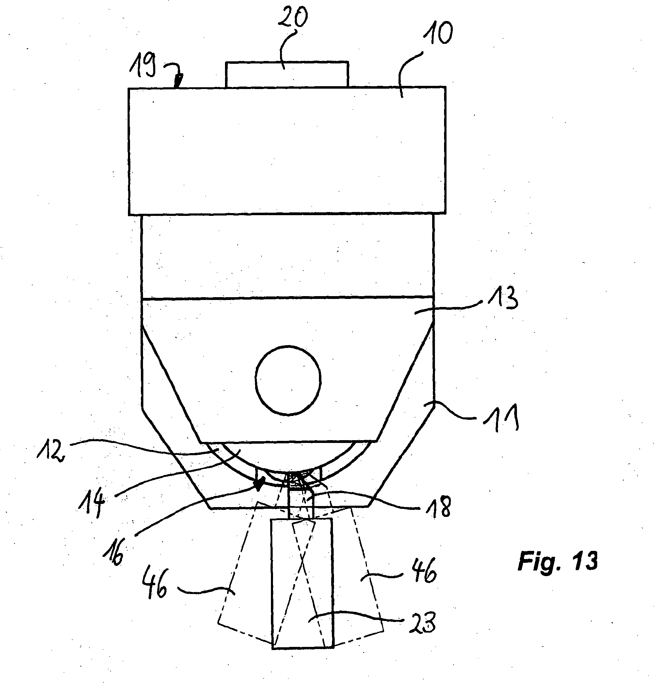

Fig. 13 zeigt eine Ansicht von der Seite auf den Reitstock 13, in welcher verschiedene Arbeitspositionen 46 des Werkzeugträgers 23 mit dem Werkzeug 18 gezeigt sind. Diese Positionen 46 gehen durch Verschwenken des Werkzeugträgers 23 und des Aufbauschlittens 10 gegeneinander um eine Achse, die parallel zur Drehachse ausgerichtet ist, ineinander über. Es können auch Zwischenpositionen eingenommen werden.

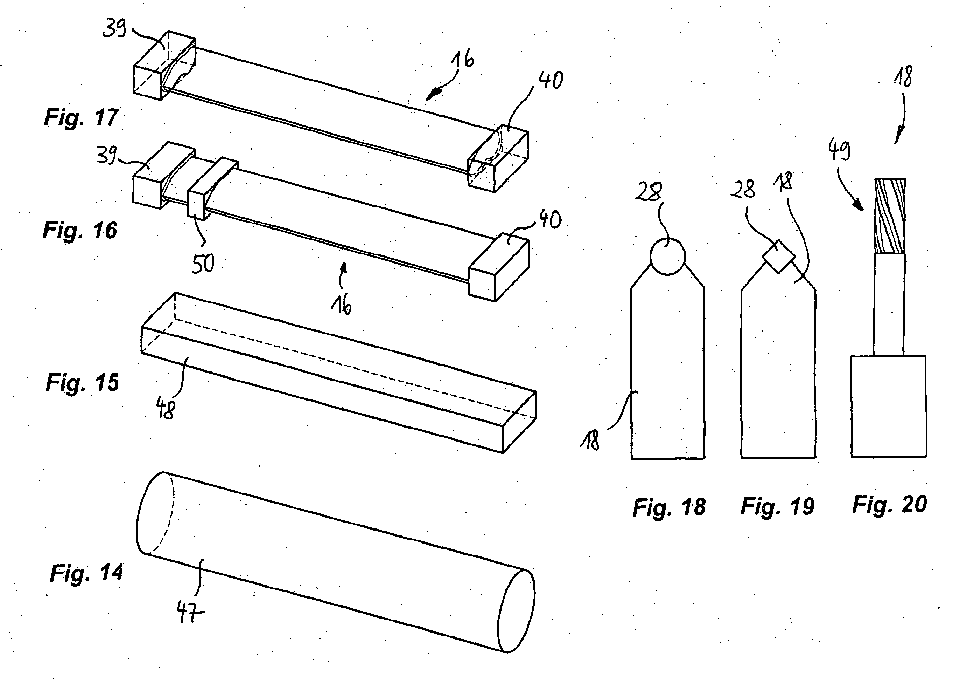

Fig. 14 zeigt einen Rohling 47 mit rundem Querschnitt, aus welchem ein Werkstück 16 gefertigt werden kann. Fig. 15 zeigt einen Rohling 48 mit rechteckigem Querschnitt. Bei den Rohlingen 47, 48 werden die gegen das Werkzeug 18 vorstehenden Kanten zunächst in einem Schruppvorgang bearbeitet, um eine Annäherung an die gewünschte Endform des Werkstücks 16 zu erzielen.

Fig. 16 und 17 zeigen beispielhaft zwei mögliche Werkstücke 16, die mit dem erfindungsgemäßen Verfahren an der erfindungsgemäßen Drehbearbeitungsmaschine gefertigt werden können. Hierbei kann das Werkstück 16 eine Verdickung 50 seines Profils entlang seiner Längsrichtung aufweisen. Es sind beispielhaft schematisierte Turbinenschaufeln dargestellt.

Fig. 18 und 19 zeigen beispielhaft Drehwerkzeuge 18 mit unterschiedlichen Schneiden 28 zur Fertigung unterschiedlicher Konturen des Profils 33 des Werkstücks 16.

Fig. 20 zeigt ein Werkzeug 18 mit einem Fräser 49, mit welchem beispielsweise die ebenen Flächen der Verdickung 50 gefertigt werden können.

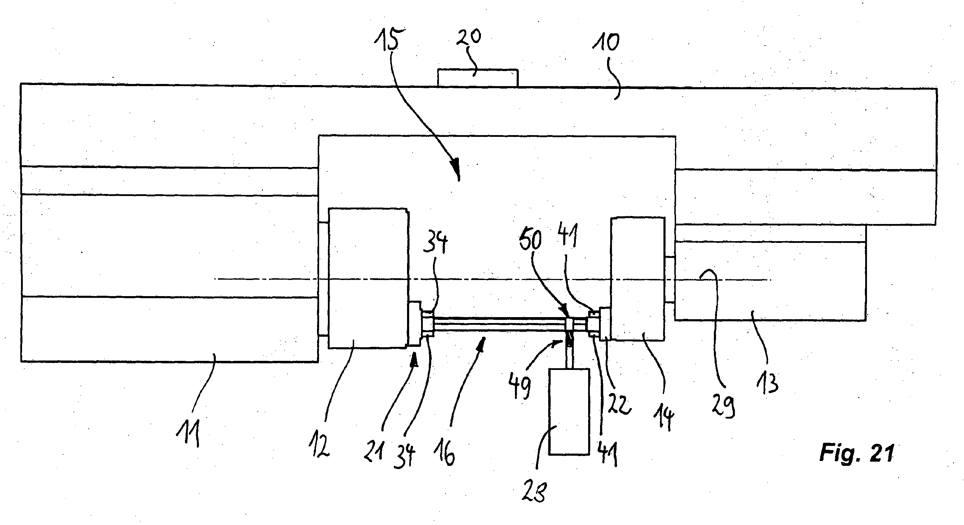

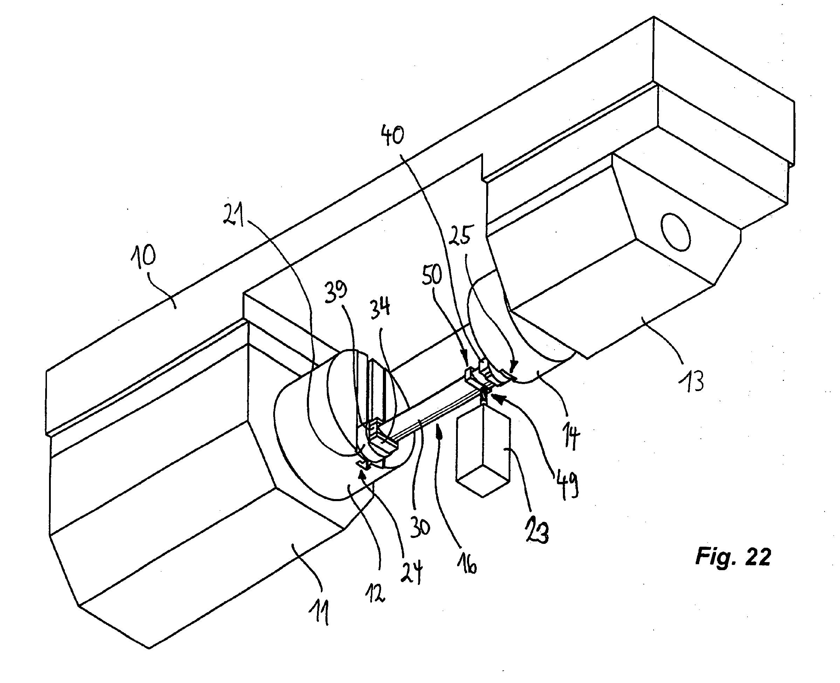

Fig. 21 und Fig. 22 zeigen diese Fertigung, die sich an die zuvor beschriebene Drehbearbeitung anschließen oder dieser vorausgehen kann.

Bei der Drehbearbeitungsmaschine 1 wird vorgeschlagen, dass das zur Drehbearbeitung mit einem Werkzeug 18 vorgesehene Werkstück 16 mit seiner Längsachse parallel zur Drehachse 29 der rotierenden Spannvorrichtung 15 derart eingespannt wird, dass die Drehachse 29 das Werkstück 16 nicht schneidet, und dass die Lage des Werkstücks 16 in der Spannvorrichtung 15 zwischen zwei Bearbeitungsschritten der Drehbearbeitung derart verändert wird, dass bisher unbearbeitete Oberflächenbereiche 30, 36 in den Arbeitsbereich des Werkszeugs 18 gebracht sind.

## Patentansprüche

1. Verfahren zur spanenden Drehbearbeitung eines langgestreckten, eine Längsachse aufweisenden Werkstücks (16), welches Werkstück (16) in einer Spannvorrichtung (15) aufgespannt wird und mit einer Bearbeitungsgeschwindigkeit um eine Drehachse (29) rotiert wird, wobei ein die Drehbearbeitung verrichtendes Drehwerkzeug (18) quer zur Drehachse (29) zugestellt wird und die Schnittgeschwindigkeit der Drehbearbeitung aus der Rotation des Werkstücks (16) relativ zu dem Drehwerkzeug (18) resultiert, **dadurch gekennzeichnet, dass** das Werkstück (16) mit seiner Längsachse parallel zur Drehachse (29) aber exzentrisch und mit radialem Abstand zur Drehachse (29) in der Spannvorrichtung (15) derart eingespannt wird, dass die Drehachse (29) nicht durch das Werkstück (16) verläuft, und das Drehwerkzeug (18) radial von außen quer zur Drehachse (29) zugestellt wird, wobei das Werkstück (16) auf einem gedachten Zylinder um die Drehachse (29) kreist und wobei ein Profil mit unrunder Kontur gefertigt wird, und dass die Kreisgeschwindigkeit der Drehgeschwindigkeit des Werkstücks entspricht und das Werkstück bei einer Kreisbewegung um die zentrale Drehachse (29) eine Umdrehung macht und immer dieselbe Außenseite des Werkstücks (16) während der spanenden Bearbeitung radial nach außen weist, wobei das Werkstück (16) während der Drehbearbeitung unbeweglich relativ zu der Spannvorrichtung (15) gehalten wird.

2. Verfahren nach Anspruch 1, **dadurch gekennzeichnet, dass** das Drehwerkzeug (18) während einer Umdrehung des Werkstücks (16) in unterschiedliche radiale Abstände von der Drehachse (29) verfahren wird.

3. Verfahren nach einem der Ansprüche 1 oder 2, **dadurch gekennzeichnet, dass** die Zustellbewegung des Drehwerkzeugs (18) synchron mit der Rotation des Werkstücks (16) ausgeführt wird.

4. Verfahren nach einem der Ansprüche 1 bis 3, **dadurch gekennzeichnet, dass** das Drehwerkzeug (18) und das Werkstück (16) während der Drehbearbeitung zusätzlich parallel zur Drehachse (29) relativ zueinander verfahren werden.

5. Verfahren nach einem der Ansprüche 1 bis 4, **dadurch gekennzeichnet, dass** das Werkstück (16) nach der Drehbearbeitung der radial nach außen weisenden Oberflächenbereiche (30) in der Spannvorrichtung (15) derart lageverändert wird, dass bisher radial nach innen weisende Oberflächenbereiche (36) nach außen weisen, und dass die nun nach außen weisenden Oberflächenbereiche (36) drehbearbeitet werden.

6. Verfahren nach einem der Ansprüche 1 bis 5, **dadurch gekennzeichnet, dass** zum Lageverändern das Werkstück (16) in der Spannvorrichtung (15) auf einer in einer Radialebene liegenden Strecke, vorzugsweise auf einer durch die Drehachse (29) verlaufenden Strecke und/oder auf die in Bezug auf die Drehachse (29) gegenüberliegende Seite, verfahren wird.

7. Verfahren nach einem der Ansprüche 1 bis 6, **dadurch gekennzeichnet, dass** zum Lageverändern das Werkstück (16) zwischen einer radial zur Drehachse (29) beabstandeten und einer in Bezug auf die Drehachse (29) mittigen Position verfahren wird.

8. Verfahren nach einem der Ansprüche 1 bis 7, **dadurch gekennzeichnet, dass** zum Lageverändern das Werkstück (16) in der Spannvorrichtung (15) um einen Drehwinkel, insbesondere um 180°, um die Längsachse gedreht wird.

9. Verfahren nach einem der Ansprüche 1 bis 8, **dadurch gekennzeichnet, dass** an der rotierenden Spannvorrichtung (15) wenigstens zwei Werkstücke (16) aufgespannt werden und dass die wenigstens zwei Werkstücke (16) in einem gemeinsamen Arbeitsgang drehbearbeitet werden.

10. Verfahren nach einem der Ansprüche 1 bis 9, **dadurch gekennzeichnet, dass** das Drehwerkzeug (18) mit seiner Zustellrichtung während der Drehbearbeitung in einer radialen und/oder in einer die Drehachse (29) einschließenden Ebene verschwenkt wird.

11. Verfahren nach einem der Ansprüche 1 bis 10, **dadurch gekennzeichnet, dass** wenigstens zwei Drehwerkzeuge (18) verwendet werden, die während einer Drehbearbeitung an dem Werkstück (16) angreifen.

12. Verfahren nach einem der Ansprüche 1 bis 11, **dadurch gekennzeichnet, dass** ein unrundes, insbesondere ein einen quer zu seiner Längsachse flachen Querschnitt aufweisendes, Werkstück (16) gefertigt wird.

13. Verfahren nach einem der Ansprüche 1 bis 12, **dadurch gekennzeichnet, dass** ein Rohling (47, 48) mit Freiform, insbesondere mit rechteckigem, rundem oder ellipsenförmigem Ausgangsquerschnitt quer zu seiner Längsachse drehbearbeitet wird.

14. Verfahren nach einem der Ansprüche 1 bis 13, **dadurch gekennzeichnet, dass** zur Drehbearbeitung zuerst ein Schruppen und anschließend ein Schlichten durchgeführt werden.

15. Verfahren nach einem der Ansprüche 1 bis 14, **dadurch gekennzeichnet, dass** während des Schruppens ein Drehrichtungswechsel ausgeführt wird.

16. Verfahren nach einem der Ansprüche 1 bis 15, **dadurch gekennzeichnet, dass** während des Schruppens der radiale Abstand des Werkzeugs (18) zur Drehachse (29) der Spannvorrichtung (15) über eine Umdrehung unverändert bleibt.

17. Verfahren nach einem der Ansprüche 1 bis 16, **dadurch gekennzeichnet, dass** beim Schruppen dem Werkstück (16) eine Form gegeben wird, die nahe an der Fertigkontur liegt.

18. Verfahren nach einem der Ansprüche 1 bis 17, **dadurch gekennzeichnet, dass** die Rotation des Werkstücks (16) mit wenigstens 5 U/min, vorzugsweise wenigstens 10 U/min, ausgeführt wird.

19. Verfahren nach einem der Ansprüche 1 bis 18, **dadurch gekennzeichnet, dass** in einer Aufspannung bei einem ersten Werkstück (16) einerseits und einem zweiten Werkstück (16) andererseits unterschiedliche Oberflächenbereiche (30, 36, 37), insbesondere mit unterschiedlich gekrümmten, quer zur jeweiligen Längsachse verlaufenden Konturen, bearbeitet werden.

20. Drehbearbeitungsvorrichtung (1) für unrunde Profile, mit einer von einer Drehspindel angetriebenen Spannvorrichtung (15) und einem quer zu der Drehachse (29) der Drehspindel zustellbaren Werkzeugträger (23) mit einem Drehwerkzeug (18), **dadurch gekennzeichnet, dass** die Spannvorrichtung (15) eine exzentrisch mit radialem Abstand zur Drehachse (29) der Drehspindel angeordnete Werkstückaufnahme (21) aufweist, und dass eine Synchronisationseinrichtung vorgesehen ist, welche die Zustellbewegung des Werkzeugträgers (23) mit der Rotation der Drehspindel synchronisiert, so dass eine Verstellbewegung des Drehwerkzeugs (18) während eines Spanabhubs am Drehwerkzeug (18) synchron mit der Rotation eines Spannfutters (12) der Spannvorrichtung (15) ausführbar ist.

21. Drehbearbeitungsvorrichtung (1) nach Anspruch 20, **dadurch gekennzeichnet, dass** die Spannvorrichtung (15) eine um die Drehachse (29) der Drehspindel rotierbare Reitstockpinole (14) mit einer Gegenaufnahme (22) für das von der Drehspindel abgewandte Ende (40) des Werkstücks (16) aufweist.

22. Drehbearbeitungsmaschine (1) nach Anspruch 20 oder 21, **dadurch gekennzeichnet, dass** die Spannvorrichtung (15) einen Unwuchtausgleich (27) für das eingespannte Werkstück (16) aufweist.

23. Drehbearbeitungsmaschine (1) nach einem der Ansprüche 20 bis 22, **dadurch gekennzeichnet, dass** der Unwuchtausgleich (27) und die Werkstückaufnahme (21) synchron insbesondere radial verfahrbar angeordnet sind.

24. Drehbearbeitungsmaschine (1) nach einem der Ansprüche 20 bis 23, **dadurch gekennzeichnet, dass** der Unwuchtausgleich (27) durch ein weiteres, eingespanntes Werkstück (16) gebildet ist.

25. Drehbearbeitungsmaschine (1) nach einem der Ansprüche 20 bis 24, **dadurch gekennzeichnet, dass** die Spannvorrichtung (15) eine bezüglich der Drehachse (29) der Drehspindel drehsymmetrische Anordnung von wenigstens zwei Werkstückaufnahmen (16) aufweist.

26. Drehbearbeitungsmaschine (1) nach einem der Ansprüche 20 bis 25, **dadurch gekennzeichnet, dass** die Werkstückaufnahme (21) und/oder die Gegenaufnahme (22) um eine parallel zur Drehachse (29) der Drehspindel ausgerichteten Achse drehbar und/oder quer zur Drehachse (29), insbesondere die Drehachse (29) schneidend und/oder auf die in Bezug auf die Drehachse (29) gegenüberliegende Seite, verfahrbar angeordnet ist/sind.

27. Drehbearbeitungsmaschine (1) nach einem der Ansprüche 20 bis 26, **dadurch gekennzeichnet, dass** die Reitstockpinole (14) durch einen Drehantrieb antreibbar ist.

28. Drehbearbeitungsmaschine (1) nach einem der Ansprüche 20 bis 27, **dadurch gekennzeichnet, dass** eine weitere Synchronisationseinrichtung vorgesehen ist, mit welcher die Rotation der Drehspindel mit der Rotation der Reitstockpinole (14) synchronisierbar ist.

29. Drehbearbeitungsmaschine (1) nach einem der Ansprüche 20 bis 28, **dadurch gekennzeichnet, dass** zusätzlich eine Bearbeitungseinheit zur Schruppbearbeitung vorgesehen ist.

30. Drehbearbeitungsmaschine (1) nach einem der Ansprüche 20 bis 29, **dadurch gekennzeichnet, dass** der Werkzeugträger (23) um eine windschief zur Drehachse (29) der Drehspindel ausgerichtete Achse, insbesondere um eine in einer Radialebene liegende Achse, schwenkbar angeordnet ist.

31. Drehbearbeitungsmaschine (1) nach einem der Ansprüche 20 bis 30, **dadurch gekennzeichnet, dass** der Werkzeugträger (23) und die Werkstückaufnahme (21) zusätzlich parallel zur Drehachse (29) der Drehspindel gegeneinander verfahrbar angeordnet sind.

## Claims

1. Method for machining by lathing an elongate workpiece (16) having a longitudinal axis, said workpiece (16) being clamped in a clamping device (15) and being rotated at a processing speed about an axis of rotation (29), wherein a turning tool (18) which performs the lathing is advanced transversely with respect to the axis of rotation (29) and the cutting speed of the lathing process results from the rotation of the workpiece (16) relative to the turning tool (18), **characterised in that** the workpiece (16) is chucked in the clamping device (15) with its longitudinal axis parallel to the axis of rotation (29) but eccentrically and at a radial distance from the axis of rotation (29), that the axis of rotation (29) does not extend through the workpiece (16), and the turning tool (18) is advanced radially from outside transversely with respect to the axis of rotation (29), wherein the workpiece (16) orbits about the axis of rotation (29) on an imaginary cylinder, and wherein a profile with a non-round contour is produced, and that the orbiting speed corresponds to the rotational speed of the workpiece, and, during an orbiting movement about the central axis of rotation (29), the workpiece effects one revolution and the same outer face of the workpiece (16) always points radially outwards during machining, wherein the workpiece (16) is immovably held relative to the clamping device (15) during the lathing process.

2. Method as claimed in claim 1, **characterised in that**, during a revolution of the workpiece (16), the turning tool (18) is moved to different radial distances from the axis of rotation (29).

3. Method as claimed in any one of claims 1 or 2, **characterised in that** the advance movement of the turning tool (18) is effected in synchronism with the rotation of the workpiece (16).

4. Method as claimed in any one of claims 1 to 3, **characterised in that**, during lathing, the turning tool (18) and the workpiece (16) are additionally moved relative to one another, parallel to the axis of rotation (29).

5. Method as claimed in any one of claims 1 to 4, **characterised in that**, after the lathing of the radially outwardly-facing surface regions (30), the position of the workpiece (16) in the clamping device (15) is changed such that previously radially inwardly-facing surface regions (36) face outwards, and that the surface regions (36) which are now facing outwards are lathed.

6. Method as claimed in any one of claims 1 to 5, **characterised in that** in order to change the position, the workpiece (16) is moved in the clamping device (15) on a path lying in a radial plane, preferably on a path extending through the axis of rotation (29) and/or onto the side lying opposite with respect to the axis of rotation (29).

7. Method as claimed in any one of claims 1 to 6, **characterised in that** in order to change the position, the workpiece (16) is moved between a position spaced apart radially from the axis of rotation (29) and a position which is central with respect to the axis of rotation (29).

8. Method as claimed in any one of claims 1 to 7, **characterised in that** in order to change the position, the workpiece (16) is rotated in the clamping device (15) by an angle of rotation, in particular 180°, about the longitudinal axis.

9. Method as claimed in any one of claims 1 to 8, **characterised in that** at least two workpieces (16) are clamped on the rotating clamping device (15), and that the at least two workpieces (16) are lathed in a common working step.

10. Method as claimed in any one of claims 1 to 9, **characterised in that** the turning tool (18) is pivoted with its advance direction during lathing in a radial plane and/or in a plane including the axis of rotation (29).

11. Method as claimed in any one of claims 1 to 10, **characterised in that** at least two turning tools (18) are used which engage the workpiece (16) during lathing.

12. Method as claimed in any one of claims 1 to 11, **characterised in that** a non-round workpiece (16), in particular one having a cross section which is flat transverse to the longitudinal axis thereof, is manufactured.

13. Method as claimed in any one of claims 1 to 12, **characterised in that** a blank (47, 48) with a free-form shape, in particular a rectangular, round or elliptic initial cross-section, is lathed transverse to the longitudinal axis thereof.

14. Method as claimed in any one of claims 1 to 13, **characterised in that**, for lathing purposes, first roughing and then smoothing are carried out.

15. Method as claimed in any one of claims 1 to 14, **characterised in that**, during roughing, a change in a direction of rotation is carried out.

16. Method as claimed in any one of claims 1 to 15, **characterised in that**, during roughing, the radial distance of the tool (18) from the axis of rotation (29) of the clamping device (15) remains unchanged during a revolution.

17. Method as claimed in any one of claims 1 to 16, **characterised in that**, during roughing, the workpiece (16) is given a shape close to a finished contour.

18. Method as claimed in any one of claims 1 to 17, **characterised in that** the rotation of the workpiece (16) is performed at at least 5 rpm, preferably at least 10 rpm.

19. Method as claimed in any one of claims 1 to 18, **characterised in that**, in one clamping operation, in the case of a first workpiece (16), on the one hand, and of a second workpiece (16), on the other hand, different surface regions (30, 36, 37), in particular with differently curved contours extending transversely with respect to the respective longitudinal axis, are machined.

20. Lathe (1) for non-round profiles, having a clamping device (15) driven by a rotary spindle, and having a tool carrier (23) capable of being advanced transversely with respect to the axis of rotation (29) of the rotary spindle and having a turning tool (18), **characterised in that** the clamping device (15) has a workpiece receiver (21) arranged eccentrically at a radial distance from the axis of rotation (29) of the rotary spindle, and that a synchronising device is provided, which synchronises the advancing movement of the tool carrier (23) with the rotation of the rotary spindle and so an adjustment movement of the turning tool (18) during a machining stroke on the turning tool (18) can be effected in synchronism with the rotation of a chuck (12) of the clamping device (15).

21. Lathe (1) as claimed in claim 20, **characterised in that** the clamping device (15) has a tailstock centre sleeve (14) rotatable about the axis of rotation (29) of the rotary spindle and having a counter-receiver (22) for the end (40) of the workpiece (16) which faces away from the rotary spindle.

22. Lathe (1) as claimed in claim 20 or 21, **characterised in that** the clamping device (15) has an imbalance compensation arrangement (27) for the chucked workpiece (16).

23. Lathe (1) as claimed in any one of claims 20 to 22, **characterised in that** the imbalance compensation arrangement (27) and the workpiece receiver (21) are arranged so as to be movable synchronously, in particular radially.

24. Lathe (1) as claimed in any one of claims 20 to 23, **characterised in that** the imbalance compensation arrangement (27) is formed by a further chucked workpiece (16).

25. Lathe (1) as claimed in any one of claims 20 to 24, **characterised in that** the clamping device (15) has an arrangement of at least two workpiece receivers (16) which is rotationally symmetrical with respect to the axis of rotation (29) of the rotary spindle.

26. Lathe (1) as claimed in any one of claims 20 to 25, **characterised in that** the workpiece receiver (21) and/or the counter-receiver (22) is/are arranged rotatably about an axis oriented parallel to the axis of rotation (29) of the rotary spindle and/or arranged transversely with respect to the axis of rotation (29), in particular so as to intersect the axis of rotation (29), and/or arranged movably onto the side lying opposite with respect to the axis of rotation (29).

27. Lathe (1) as claimed in any one of claims 20 to 26, **characterised in that** the tailstock centre sleeve (14) can be driven by a rotary drive.

28. Lathe (1) as claimed in any one of claims 20 to 27, **characterised in that** a further synchronising device is provided, by which the rotation of the rotary spindle can be synchronised with the rotation of the tailstock centre sleeve (14).

29. Lathe (1) as claimed in any one of claims 20 to 28, **characterised in that** a machining unit for rough machining is additionally provided.

30. Lathe (1) as claimed in any one of claims 20 to 29, **characterised in that** the tool carrier (23) is arranged pivotably about an axis oriented skew to the axis of rotation (29) of the rotary spindle, in particular about an axis lying in a radial plane.

31. Lathe (1) as claimed in any one of claims 20 to 30, **characterised in that** the tool carrier (23) and the workpiece receiver (21) are additionally arranged so as to be movable with respect to one another parallel to the axis of rotation (29) of the rotary spindle.

## Revendications

1. Procédé de tournage d'une pièce allongée (16) qui présente un axe longitudinal, ladite pièce (16) étant serrée dans un dispositif de serrage (15) et tournée selon une vitesse d'usinage autour d'un axe de rotation (29), un outil de tournage (18) exécutant l'usinage étant avancé transversalement à l'axe de rotation (29) et la vitesse de coupe de l'usinage résulte de la rotation de la pièce (16) par rapport à l'outil de tournage (18), **caractérisé en ce que** la pièce (16) est serrée dans le dispositif de serrage (15) avec son axe longitudinal parallèle à l'axe de rotation (29) mais de manière excentrique et à une distance radiale par rapport à l'axe de rotation (29), de telle sorte que l'axe de rotation (29) ne s'étend pas à travers la pièce (16), et l'outil de tournage (18) est avancé radialement de l'extérieur transversalement à l'axe de rotation (29), la pièce (16) circule autour de l'axe de rotation (29) sur un cylindre imaginaire et un profil est fabriqué avec un contour ovale, et **en ce que** la vitesse circulaire correspond à la vitesse de rotation de la pièce et la pièce fait un tour autour de l'axe de rotation central (29) lors d'un mouvement circulaire et oriente toujours le même coté extérieur de la pièce (16) radialement vers l'extérieur pendant l'usinage, la pièce (16) étant maintenue immobile par rapport au dispositif de serrage (15) pendant l'usinage.

2. Procédé selon la revendication 1, **caractérisé en ce que** l'outil de tournage (18) est déplacé à différentes distances radiales de l'axe de rotation (29) pendant un tour de la pièce (16).

3. Procédé selon une des revendications 1 ou 2, **caractérisé en ce que** le mouvement d'avancement de l'outil de tournage (18) est réalisé de manière synchrone avec la rotation de la pièce (16).

4. Procédé selon une des revendications 1 à 3, **caractérisé en ce que** l'outil de tournage (18) et la pièce (16) sont en outre déplacés l'un par rapport à l'autre parallèlement à l'axe de rotation (29) pendant l'usinage.

5. Procédé selon une des revendications 1 à 4, **caractérisé en ce que** la position de la pièce (16) dans le dispositif de serrage (15) est modifiée après l'usinage des zones de surface (30) orientées radialement vers l'extérieur, de telle sorte que les zones de surface (36) orientées jusqu'ici radialement vers l'intérieur s'orientent vers l'extérieur et que les zones de surface (36) alors orientées vers l'extérieur sont usinées.

6. Procédé selon une des revendications 1 à 5, **caractérisé en ce que**, pour modifier la position, la pièce (16) est déplacée dans le dispositif de serrage (15) sur une distance dans un plan radial, de préférence sur une distance s'étendant à travers l'axe de rotation (29) et/ou sur la face opposée par rapport à l'axe de rotation (29).

7. Procédé selon une des revendications 1 à 6, **caractérisé en ce que**, pour modifier la position, la pièce (16) est déplacée entre une position distante radialement par rapport à l'axe de rotation (29) et une position centrale par rapport à l'axe de rotation (29).

8. Procédé selon une des revendications 1 à 7, **caractérisé en ce que**, pour modifier la position, la pièce (16) est tournée dans le dispositif de serrage (15) autour d'un angle de rotation, en particulier de 180°, autour de l'axe longitudinal.

9. Procédé selon une des revendications 1 à 8, **caractérisé en ce qu'**au, moins deux pièces (16) sont serrées sur le dispositif de serrage rotatif (15) et **en ce que** les au moins deux pièces (16) sont usinées en tournant dans une phase de travail commune.

10. Procédé selon une des revendications 1 à 9, **caractérisé en ce que** l'outil de tournage (18) avec sa direction d'avancement pendant le tournage est pivoté dans un plan radial et/ou dans un plan incluant l'axe de rotation (29).

11. Procédé selon une des revendications 1 à 10, **caractérisé en ce qu'**au moins deux outils de tournage (18) sont utilisés et saisissent la pièce (16) pendant un tournage.

12. Procédé selon une des revendications 1 à 11, **caractérisé en ce qu'**une pièce (16) ovale, en particulier une pièce présentant une section plate transversalement à son axe longitudinal, est fabriquée.

13. Procédé selon une des revendications 1 à 12, **caractérisé en ce qu'**une ébauche (47, 48) avec une forme libre, en particulier avec une section finale rectangulaire, ronde ou elliptique, est usinée transversalement à son axe longitudinal.

14. Procédé selon une des revendications 1 à 13, **caractérisé en ce que**, pour l'usinage par tournage, il est d'abord réalisé un ébauchage puis un aplanissement.

15. Procédé selon une des revendications 1 à 14, **caractérisé en ce que**, pendant l'ébauchage, un changement de direction de rotation est réalisé.

16. Procédé selon une des revendications 1 à 15, **caractérisé en ce que**, pendant l'ébauchage, la distance radiale de l'outil (18) par rapport à l'axe de rotation (29) du dispositif de serrage (15) est inchangée sur un tour.

17. Procédé selon une des revendications 1 à 16, **caractérisé en ce que**, pendant l'ébauchage, une forme proche du contour final est donnée à la pièce (16).

18. Procédé selon une des revendications 1 à 17, **caractérisé en ce que** la rotation de la pièce (16) est réalisée avec au moins 5 U/min, de préférence au moins 10 U/min.

19. Procédé selon une des revendications 1 à 18, **caractérisé en ce que**, dans un serrage d'une première pièce (16) d'une part et d'une seconde pièce (16) d'autre part, différentes zones de surface (30, 36, 37), en particulier avec différents contours courbés, s'étendant transversalement à l'axe longitudinal respectif, sont usinés.

20. Dispositif de tournage (1) pour profils ovales, avec un dispositif de serrage (15) entraîné par un mandrin, ainsi qu'un support d'outil (23) qui peut être avancé transversalement à l'axe de rotation (29) du mandrin et comportant un outil de tournage (18), **caractérisé en ce que** le dispositif de serrage (15) présente un logement de pièce (21) disposé de manière excentrique à une distance radiale par rapport à l'axe de rotation (29) du mandrin, et **en ce qu'**un système de synchronisation est prévu, qui synchronise le mouvement d'avancement du support d'outil (23) avec la rotation du mandrin, de telle sorte qu'un mouvement de déplacement de l'outil de tournage (18) est, pendant une course de serrage sur l'outil de tournage (18), exécutable de manière synchrone avec la rotation d'un mandrin de serrage (12) du dispositif de serrage (15).

21. Dispositif de tournage (1) selon la revendication 20, **caractérisé en ce que** le dispositif de serrage (15) présente un fourreau (14) pouvant tourner autour de l'axe de rotation (29) du mandrin, avec un contre-logement (22) pour l'extrémité (40) de la pièce (16) opposée au mandrin.

22. Dispositif de tournage (1) selon la revendication 20 ou 21, **caractérisé en ce que** le dispositif de serrage (15) présente une compensation de balourd (27) pour la pièce (16) serrée.

23. Dispositif de tournage (1) selon une des revendications 20 à 22, **caractérisé en ce que** la compensation de balourd (27) et le logement de pièce (21) sont disposés mobiles de manière synchrone en particulier radialement.

24. Dispositif de tournage (1) selon une des revendications 20 à 23, **caractérisé en ce que** la compensation de balourd (27) est formée par une autre pièce (16) serrée.

25. Dispositif de tournage (1) selon une des revendications 20 à 24, **caractérisé en ce que** le dispositif de serrage (15) présente une disposition symétrique en rotation par rapport à l'axe de rotation (29) du mandrin d'au moins deux logements de pièce (16).

26. Dispositif de tournage (1) selon une des revendications 20 à 25, **caractérisé en ce que** le logement de pièce (21) et/ou le contre-logement (22) est/sont disposés rotatif autour d'un axe orienté parallèlement à l'axe de rotation (29) du mandrin et/ou transversalement à l'axe de rotation (29), en particulier coupant l'axe de rotation (29) et/ou mobile sur la face opposée à l'axe de rotation (29).

27. Dispositif de tournage (1) selon une des revendications 20 à 26, **caractérisé en ce que** le fourreau (14) peut être entraîné par un entraînement rotatif.

28. Dispositif de tournage (1) selon une des revendications 20 à 27, **caractérisé en ce qu'**un autre système de synchronisation est prévu, avec lequel la rotation du mandrin peut être synchronisée avec la rotation du fourreau (14).

29. Dispositif de tournage (1) selon une des revendications 20 à 28, **caractérisé en ce qu'**une unité d'usinage supplémentaire est prévue pour l'ébauchage.

30. Dispositif de tournage (1) selon une des revendications 20 à 29, **caractérisé en ce que** le support d'outil (23) est disposé pivotant autour d'un axe orienté de travers par rapport à l'axe de rotation (29) du mandrin, en particulier autour d'un axe situé dans un plan radial.

31. Dispositif de tournage (1) selon une des revendications 20 à 30, **caractérisé en ce que** le support d'outil (23) et le logement de pièce (21) sont en outre disposés mobiles l'un par rapport à l'autre, parallèlement à l'axe de rotation (29) du mandrin.
